# EUROPEAN PATENT APPLICATION

(11) **EP 4 593 254 A1**
(43) Date of publication of application: **30.07.2025**
(21) Application number: 23867029.3
(22) Date of filing: 26.06.2023
(51) Int. Cl.: H02K 1/16, H02K 3/04

(54) **STATOR ASSEMBLY BASED ON FLAT WIRE SEGMENTED SKEWED SLOT WINDING**

(30) Priority: 21.09.2022 CN 202211150803
(71) Applicant: Lishui Founder Intelligent Drive Institute Co., Ltd., Lishui, Zhejiang 323000 (CN); Zhejiang Founder Motor Co., Ltd., Lishui, Zhejiang 323000 (CN)
(72) Inventor: NIU, Mingkui, Lishui, Zhejiang 323000 (CN); FENG, Huanjiang, Lishui, Zhejiang 323000 (CN); LU, Dan, Lishui, Zhejiang 323000 (CN); GAO, Zhichuan, Lishui, Zhejiang 323000 (CN)
(74) Representative: Müller Schupfner & Partner Patent- und Rechtsanwaltspartnerschaft mbB (Muc)
(86) International application number: PCT/CN2023/102347
(87) International publication number: WO 2024/060734

(57) **Abstract**

The present invention relates to a stator assembly based on a flat wire segmented skewed slot winding, comprising a stator iron core and a flat wire winding inserted into the stator iron core. The stator iron core comprises a plurality of sections, adjacent sections of the stator iron core are fixed by a connector, the flat wire winding comprises a plurality of flat wire conductors, and each flat wire conductor is twisted in a same direction at the connector, so that the upper part and the lower part of the flat wire conductor are staggered with each other. According to the present invention, each flat wire conductor is twisted at the middle part, so that a skewed pole at any angle of a flat wire motor stator can be implemented; compared with a pure rotor segmented skewed pole, a mode of mutual cooperation of skewed poles of a stator and a rotor can better resolve an NVH problem of a motor.

## Description

This application claims the benefit of priority to Chinese patent application No. 202211150803.6, filed on September 21, 2022, entitled "STATOR ASSEMBLY BASED ON FLAT WIRE SEGMENTED SKEWED SLOT WINDING", the entire disclosures of which are incorporated herein by reference.

### TECHNICAL FIELD

The present disclosure relates to the technical field of permanent magnet synchronous drive motors for new energy vehicles, and more particularly to a stator assembly based on a segmented skewed-slot flat wire winding.

### BACKGROUND

With a rapid popularization of new energy electric vehicles, permanent magnet synchronous motors have become the most widely used motors for new energy drive motors. Electric vehicles have low noise, and the electromagnetic noise of drive motors is one of the main sources of vehicle noise. With the improvement of consumer's living standards, an attention to car comfort is increasing. Thus, NVH is receiving more and more attention from research and development persons. Meanwhile, more efficient flat wire motors are increasingly being applied in the new energy drive motor industry. One effective way to solve a NVH problem is skewing of the motor, including skewing of a stator and skewing of a rotor, or be divided into continuous skewing and step skewing. Generally, the rotor is provided with step skewing. Meanwhile, a stator of a round wire motor is provided without skewing or with continuous skewing, and a stator of a flat wire motor is provided without skewing due to its process and some other reasons.

In addition, a heat dissipation problem of end windings and the rotor (especially the middle part of the rotor) has always been a challenge in the industry. Meanwhile, oil cooling technology is increasingly being applied to cool down motors. Most existing oil cooling technologies are achieved through an end oil injection or dripping, which requires additional devices to be installed at an end, and causes a complex overall structure and increased costs.

### SUMMARY

An embodiment of the present disclosure provides a stator assembly based on a segmented skewed-slot flat wire winding, which can achieve a skewing of a stator and a cooling of the middle part of a rotor and end windings.

In order to achieve above mentioned objective, the present disclosure adopts following technical solutions.

According to some embodiments, a stator assembly based on a segmented skewed-slot flat wire winding includes a stator core and a flat wire winding inserted in the stator core. The stator core includes a plurality of stator core segments, and adjacent stator core segments are fixed by a connecting member. The flat wire winding includes a plurality of flat wire conductors, and each flat wire conductor is twisted in the same direction at the connecting member to cause an upper part and a lower part of each flat wire conductor to be misaligned with each other.

According to some embodiments, the stator core includes a first stator core segment and a second stator core segment, and the first stator core segment and the second stator core segment are fixed by the connecting member.

According to some embodiments, each flat wire conductor includes a first straight segment, a bent segment and a second straight segment. The first straight segment and the second straight segment are inserted in the first stator core segment and the second stator core segment respectively, and the bent segment is arranged inside the connecting member.

According to some embodiments, the connecting member is annular and an oil guide ring groove is provided on an outer wall of the connecting member.

According to some embodiments, a plurality of radial oil guide holes are provided on a bottom of the oil guide ring groove, and the plurality of radial oil guide holes are evenly spaced circumferentially along the oil guide ring groove.

According to some embodiments, two opposite side walls of the oil guide ring groove are respectively provided with axial oil guide holes, and the stator core is provided with cooling pipes connected with the axial oil guide holes.

According to some embodiments, a plurality of axial oil guide holes are provided, and the number of the axial oil guide holes is the same as the number of cooling pipes, and the plurality of axial oil guide holes are evenly spaced circumferentially along the oil guide ring groove.

The technical solution of the embodiment of the present disclosure has following beneficial effects:

The present disclosure can achieve any skewing angle of a stator of a flat wire motor by a torsion of the middle part of each flat wire conductor. Compared with a step skewing of a rotor, a skewing of the stator and the rotor cooperating with each other can better solve a NVH problem of the motor.

### BRIEF DESCRIPTION OF THE DRAWINGS

The accompanying drawings described herein are intended to provide a further understanding of the present disclosure, and constitute a portion of the present disclosure. Example embodiments of the present disclosure and descriptions thereof are intended to describe the present disclosure, and do not constitute limitations on the present disclosure.
FIG. 1 is a schematic view of a stator assembly according to an embodiment of the present disclosure;

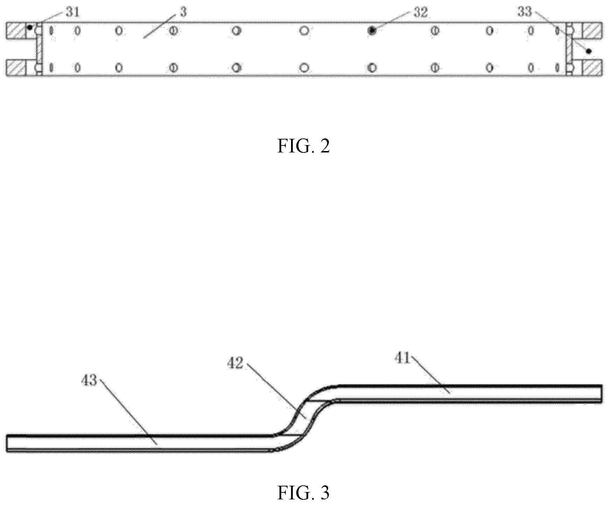

FIG. 2 is a schematic view of a connecting member according to an embodiment of the present disclosure;
FIG. 3 is a schematic view of a flat wire conductor according to an embodiment of the present disclosure.

Reference signs: 1: first stator core segment; 2: second stator core segment; 3: connecting member; 4: flat wire conductor; 31: axial oil guide hole; 32: radial oil guide hole; 33: oil guide ring groove; 41: first straight segment; 42: bent segment; 43: second straight segment.

### DETAILED DESCRIPTION

It should be noted that the following detailed description is exemplary and is intended to provide further explanation of the present disclosure. Unless defined otherwise, all technical and scientific terms used herein have the same meaning as commonly understood by those skilled in the art.

It should be noted that the terms used herein are for the purpose of describing particular embodiments only, rather than limiting example embodiments according to the present disclosure. For example, as used herein, a singular form is intended to include a plural form, unless the context clearly indicates otherwise. It should be further understood that the terms "comprise" and/or "include" when used in this description, specify the presence of stated features, steps, operations, elements, components and/or groups thereof.

Furthermore, in the description of the present disclosure, it should be understood that the terms "center", "longitudinal", "lateral", "length", "width", "thickness", "upper", "lower", "front", "rear", "left", "right", "vertical", "horizontal", "top", "bottom", "inner", "clockwise", "counterclockwise", and the like, indicate orientations and positional relationships based on those shown in the drawings, and are only for convenience of description and simplicity of description, but do not indicate or imply that the device or element being referred to must have a particular orientation, be constructed and operated in a particular orientation, and thus, should not be considered as limiting the present disclosure.

Furthermore, the terms "first" and "second" are used for descriptive purposes only and are not to be construed as indicating or implying relative importance or implicitly indicating the number of technical features indicated. Thus, a feature defined as "first" or "second" may explicitly or implicitly includes one or more of those features. In the description of the present disclosure, "a plurality" means two or more, unless the context clearly indicates otherwise.

In the present disclosure, unless otherwise expressly specified or limited, the terms "mounted", "coupled", "connected", "fixed" and the like are to be construed broadly and can, for example, be fixedly connected, detachably connected, or integrally connected, can be mechanically or electrically connected, or can be connected directly or indirectly through intervening media, or can be interconnected between two elements. The specific meanings of the above terms in the present disclosure can be understood by those skilled in the art according to specific situations.

In the present disclosure, unless otherwise expressly specified or limited, a first feature "above" or "below" a second feature means that the first feature and the second feature are in direct contact, or the first feature and the second feature are not in direct contact but are in contact with each other through another feature therebetween. Also, the first feature "on", "above" and "over" the second feature means that the first feature is directly above and obliquely above the second feature, or simply indicates that the first feature is at a higher level than the second feature. The first feature "under", "below", and "beneath" the second feature means that the first feature is directly under and obliquely below the second feature, or simply means that the first feature is at a lower level than the second feature.

The present disclosure will be further explained with reference to the following embodiments and drawings.

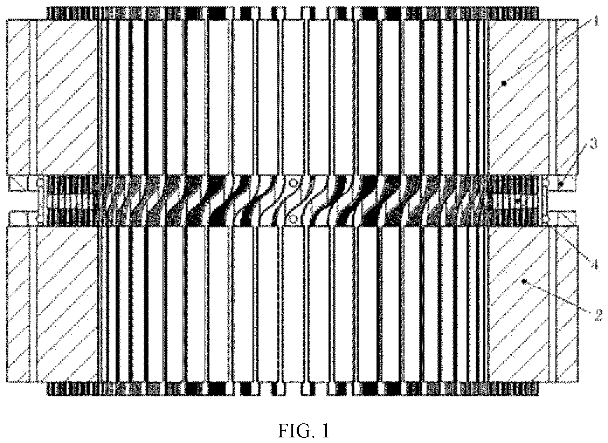

As shown in FIG. 1, a stator assembly based on a segmented skewed-slot flat wire winding includes a stator core and a flat wire winding inserted in the stator core. The stator core includes a plurality of stator core segments, and adjacent stator core segments are fixed by a connecting member 3. The flat wire winding includes a plurality of flat wire conductors 4, and each flat wire conductor 4 is twisted in the same direction at the connecting member 3 to cause an upper part and a lower part of each flat wire conductor 4 to be misaligned with each other.

In some embodiments, the stator core includes a first stator core segment 1 and a second stator core segment 2, and the first stator core segment 1 and the second stator core segment 2 are fixed by the connecting member 3.

In some embodiments, each flat wire conductor 4 includes a first straight segment 41, a bent segment 42 and a second straight segment 43. The first straight segment 41 and the second straight segment 43 are inserted in the first stator core segment 1 and the second stator core segment 2 respectively, and the bent segment 42 is located inside the connecting member 3. Each flat wire conductor is twisted at the middle part between the two stator core segments to form the bent segment 42. The flat wire conductor can be inserted into one stator core segment and then twisted (applicable to HairPin-IPin, Ipin-IPin), or can be twisted and formed before inserted into the stator core segments. The flat wire conductor in the present disclosure does not involve an end connection part and can meet all the end connection forms of flat wire motors.

In some embodiments, the connecting member 3 is annular and an oil guide ring groove 33 is formed on an outer wall of the connecting member 3. A plurality of radial oil guide holes 32 are formed on a bottom of the oil guide ring groove 33, and the plurality of radial oil guide holes 32 are evenly spaced circumferentially along the oil guide ring groove 33. Axial oil guide holes 31 are formed on two opposite side walls of the oil guide ring groove 33 respectively, and the stator core is provided with cooling pipes connected with the axial oil guide holes 31. In some embodiments, there may be multiple axial oil guide holes 31, and the number of the axial oil guide holes 31 is the same as the number of cooling pipes. The plurality of axial oil guide holes 31 are evenly spaced circumferentially along the oil guide ring groove 33.

According to some embodiments of the present disclosure, the oil guide ring groove is arranged at the skewing space position of the aforementioned design. While the stator core segments are connected and fixed, the end of the stator and the middle part of the rotor can be effectively cooled by a cooling oil flowing through the radial oil guide holes and the axial guide holes. The present disclosure can combine with the flow resistances of various oil circuits to design the oil guide ring groove and the oil guide holes respectively to control the flow rate through the oil guide holes, ultimately achieving a good cooling effect for both the end of the stator and the rotor.

According to some embodiments of the present disclosure, the step skewing of the stator is achieved by the whole twisting of the flat wire winding in conjunction with the rotating of the stator core. By providing the oil guide ring groove, the rotor can be cooled through the radial oil guide holes, and the end of the stator can be cooled through the axial oil guide holes and the oil guide holes on the stator core.

In the description of the present disclosure, the terms such as "one embodiment", "some embodiments", "examples", "specific examples", or "some examples" mean that specific features, structures, materials, or characteristics described in conjunction with the embodiments or examples are included in at least one embodiment or example of the present disclosure. In the description, the illustrative expressions of the above terms may not necessarily refer to the same embodiments or examples. Moreover, the specific features, structures, materials, or characteristics can be combined in an appropriate manner in any one or more embodiments or examples.

Although embodiments of the present disclosure have been shown and described above, it can be understood that the above embodiments are exemplary and cannot be understood as limitations to the present disclosure. An ordinary person skilled in the art can make changes, modifications, substitutions and variations to the above embodiments within the scope of the present disclosure without departing from the principles and objectives of the present disclosure. Any simple modifications, equivalent changes or modifications made to the above embodiments based on the technical essence of the present disclosure still fall within the scope of the technical solution of the present disclosure.

## Claims

1. A stator assembly based on a segmented skewed-slot flat wire winding, comprising a stator core and a flat wire winding inserted in the stator core, wherein the stator core comprises a plurality of stator core segments, and adjacent stator core segments are fixed by a connecting member (3), wherein the flat wire winding comprises a plurality of flat wire conductors (4), and each flat wire conductor (4) is twisted in the same direction at the connecting member (3) to cause an upper part and a lower part of each flat wire conductor (4) to be misaligned with each other.

2. The stator assembly based on a segmented skewed-slot flat wire winding according to claim 1, wherein the stator core comprises a first stator core segment (1) and a second stator core segment (2), and the first stator core segment (1) and the second stator core segment (2) are fixed by the connecting member (3).

3. The stator assembly based on a segmented skewed-slot flat wire winding according to claim 2, wherein each flat wire conductor (4) comprises a first straight segment (41), a bent segment (42) and a second straight segment (43), wherein the first straight segment (41) and the second straight segment (43) are inserted in the first stator core segment (1) and the second stator core segment (2) respectively, and the bent segment (42) is arranged inside the connecting member (3).

4. The stator assembly based on a segmented skewed-slot flat wire winding according to claim 1, wherein the connecting member (3) is annular and an oil guide ring groove (33) is provided on an outer wall of the connecting member (3).

5. The stator assembly based on a segmented skewed-slot flat wire winding according to claim 4, wherein a plurality of radial oil guide holes (32) are provided on a bottom of the oil guide ring groove (33), and the plurality of radial oil guide holes (32) are evenly spaced circumferentially along the oil guide ring groove (33).

6. The stator assembly based on a segmented skewed-slot flat wire winding according to claim 4, wherein two opposite side walls of the oil guide ring groove (33) are respectively provided with axial oil guide holes (31), and the stator core is provided with cooling pipes connected with the axial oil guide holes (31).

7. The stator assembly based on a segmented skewed-slot flat wire winding according to claim 6, wherein a plurality of axial oil guide holes (31) are provided, and the number of the axial oil guide holes (31) is the same as the number of cooling pipes, and the plurality of axial oil guide holes (31) are evenly spaced circumferentially along the oil guide ring groove (33).
